# EUROPÄISCHE PATENTSCHRIFT

(11) **EP 1 526 147 B1**
(45) Veröffentlichungstag und Bekanntmachung des Hinweises auf die Patenterteilung: **21.02.2007**
(21) Anmeldenummer: 04103983.5
(22) Anmeldetag: 19.08.2004
(51) Int. Cl.: C08G 18/79, C08G 18/80

(54) **Feste uretdiongruppenhaltige Polyadditionsverbindungen**
Solid uretdione group containing polyaddition compounds
Compositions de polyaddition solides contenant des groupes uretdione

(30) Priorität: 15.10.2003 DE 10347902
(43) Veröffentlichungstag der Anmeldung: 27.04.2005
(73) Patentinhaber: Degussa GmbH, 40474 Düsseldorf (DE)
(72) Erfinder: Wenning, Andreas, 48301, Nottuln (DE); Spyrou, Emmanouil, 46282, Dorsten (DE)

(56) Entgegenhaltungen:
- EP-A- 0 669 354
- EP-A- 0 720 994
- EP-A- 1 057 842
- EP-A- 1 249 458

## Beschreibung

Die Erfindung betrifft feste uretdiongruppenhaltige Polyadditionsverbindungen und ein Verfahren zur Herstellung derartiger Polyadditionsverbindungen.

Bei Raumtemperatur feste, extern oder intern blockierte Polyisocyanate stellen wertvolle Vernetzer für thermisch vernetzbare Polyurethan (PUR)-Pulverlackzusammensetzungen dar.

So beschreibt z. B. DE 27 35 497 PUR-Pulverlacke mit hervorragender Witterungs- und Wärmestabilität. Die Vernetzer, deren Herstellung in DE 27 12 931 beschrieben wird, bestehen aus mit ε-Caprolactam blockiertem, Isocyanuratgruppen enthaltendem Isophorondiisocyanat. Es sind auch urethan-, biuret- oder harnstoffgruppenhaltige Polyisocyanate bekannt, deren Isocyanatgruppen ebenfalls blockiert sind.

Der Nachteil dieser extern blockierten Systeme besteht in der Abspaltung des Blockierungsmittels während der thermischen Vernetzungsreaktion. Da das Blockierungsmittel somit in die Umwelt emittieren kann, müssen aus ökologischen und arbeitshygienischen Gründen besondere Vorkehrungen zur Reinigung der Abluft und/oder Wiedergewinnung des Blockierungsmittels getroffen werden. Zudem weisen die Vernetzer eine geringe Reaktivität auf. Es sind Härtungstemperaturen oberhalb von 170 °C erforderlich.

Die DE 30 30 539 und DE30 30 572 beschreiben Verfahren zur Herstellung von uretdiongruppenhaltigen Polyadditionsverbindungen, deren terminale Isocyanatgruppen mit Monoalkoholen oder Monoaminen irreversibel blockiert sind. Nachteilig sind insbesondere die Ketten abbrechenden Bestandteile der Vernetzer, die zu geringen Netzwerkdichten der PUR-Pulverlackbeschichtungen und damit zu mäßigen Lösemittelbeständigkeiten führen.

Uretdion-Pulverlackvernetzer, die durch Umsetzung von uretdiongruppenhaltigen Polyisocyanaten mit Diolen und ester- und/oder carbonatgruppenhaltigen Kettenverlängerungsmitteln bzw. unter Verwendung von Dimerdiolen hergestellt werden, sind in der EP 0 639 598 und in der EP 0 720 994 beschrieben.

Hydroxylgruppenterminierte, uretdiongruppenhaltige Polyadditionsverbindungen sind Gegenstand der EP 0 669 353. Sie weisen aufgrund ihrer Funktionalität von zwei eine verbesserte Resistenz gegenüber Lösemitteln auf.

Den Pulverlackzusammensetzungen auf Basis dieser uretdiongruppenhaltigen Polyisocyanate ist gemeinsam, dass sie bei der Härtungsreaktion keine flüchtigen Verbindungen emittieren. Allerdings liegen die Einbrenntemperaturen mit mindestens 180 °C auf hohem Niveau.

Der Einsatz von Amidinen als Katalysatoren in PUR-Pulverlackzusammensetzungen wird in der EP 0 803 524 beschrieben. Diese Katalysatoren führen zwar zu einer Erniedrigung der Aushärtungstemperatur, zeigen aber eine beträchtliche Vergilbung, die im Beschichtungsbereich allgemein unerwünscht ist. Ursache dieser Vergilbung sind vermutlich die reaktiven Stickstoffatome in den Amidinen. Diese können sich mit Luftsauerstoff zu N-Oxiden umsetzen, die für die Verfärbung verantwortlich sind.

In der EP 0 803 524 werden auch andere Katalysatoren erwähnt, die bislang für diesen Zweck verwendet wurden, ohne aber eine besondere Wirkung auf die Aushärtetemperatur zu zeigen. Dazu gehören die aus der Polyurethan-Chemie bekannten metallorganischen Katalysatoren, wie z. B. Dibutylzinndilaurat (DBTL), oder aber tertiäre Amine, wie z. B. 1,4-Diazabicylco[2.2.2]octan (DABCO).

In der WO 00/34355 werden Katalysatoren auf der Basis von Metallacetylacetonaten, z. B. Zinkacetylacetonat, beansprucht. Solche Katalysatoren sind tatsächlich in der Lage, die Aushärtungstemperatur von uretdiongruppenhaltigen Polyurethan-Pulverlackzusammensetzungen zu erniedrigen, zeigen als Reaktionsprodukte aber hauptsächlich Allophanate (M. Gedan-Smolka, F. Lehmann, D. Lehmann "New catalysts for the low temperature curing of uretdione powder coatings" *International Waterborne, High solids and Powder Coatings Symposium, New Orleans*, 21. - 23.02.2001). Allophanate sind die Umsetzungsprodukte aus einem Mol Alkohol und zwei Mol Isocyanat, während sich in der herkömmlichen Urethanchemie ein Mol Alkohol mit einem Mol Isocyanat umsetzt. Durch die unerwünschte Allophanatbildung werden also technisch wie ökonomisch wertvolle Isocyanatgruppen vernichtet.

In DE 103 20 267, DE 102 05 608 und DE 103 20 266 werden Metallhydroxide, Metallalkoholate, quartäre Ammoniumsalze mit Hydroxiden, Fluoriden oder Carboxylaten beschrieben, die die Rückspaltung von Uretdiongruppen so stark beschleunigen, so dass sich bei Verwendung uretdiongruppenhaltiger Pulverlackhärter die Aushärtetemperatur von Pulverlackzusammensetzungen beträchtlich erniedrigen lässt.

Alle aus derartigen hoch beschleunigten Pulverlack-Zusammensetzungen hergestellte Beschichtungen besitzen das Problem, dass ihre Oberflächen starke Orangenschaleneffekte oder gar Strukturen aufweisen.

Aufgabe der vorliegenden Erfindung war es daher, neue uretdiongruppenhaltige Vernetzer zu finden, die in hochreaktiven Polyurethan-Pulverlackzusammensetzungen eingesetzt werden können, wobei die bei sehr niedrigen Temperaturen ausgehärteten, hochglänzenden oder matten, licht- und wetterstabilen Pulverbeschichtungen einen guten Verlauf zeigen.

Überraschend wurde gefunden, dass uretdiongruppenhaltige Polyadditionsverbindungen, die Dodecandiol-1,12 als Diolkomponente enthalten, als Vernetzerkomponente für bei sehr niedrigen Einbrenntemperaturen aushärtbare Polyurethan-Pulverlacke, deren Filme gut verlaufen, einsetzbar sind.

Gegenstand der vorliegenden Erfindung sind demnach feste, uretdiongruppenhaltige Polyadditionsverbindungen, erhältlich durch Umsetzung von
A) 40 bis 90 Massen-% mindestens einer aliphatischen, (cyclo)aliphatischen aromatischen oder cycloaliphatischen Polyisocyanatkomponente, aufgebaut aus
   1. mindestens 40 Massen-% einer Uretdiongruppen aufweisenden Polyisocyanatverbindung mit einer mittleren Funktionalität von mindestens 2,0
      und
   2. höchstens 60 Massen-% mindestens einer Diisocyanatverbindung und/oder Isocyanuratverbindung ohne Uretdiongruppen;
B) 60 bis 10 Massen-% Dodecandiol-1,12;
C) 50 bis 0 Massen-% mindestens einer weiteren Verbindung mit mindestens einer Hydroxylgruppe;
wobei die uretdiongruppenhaltigen Polyadditionsverbindungen einen Schmelzpunkt von 40 bis 130 °C, einen freien NCO-Gehalt von kleiner 5 Gew.-% und einen Uretdiongehalt von 6 bis 18 Gew.-% aufweisen.

Weiterer Gegenstand der Erfindung ist auch ein Verfahren zur Herstellung von festen, uretdiongruppenhaltigen Polyadditionsverbindungen.

Die erfindungsgemäß eingesetzten Uretdiongruppen aufweisenden Polyisocyanate A1) werden aus beliebigen Diisocyanaten durch katalytische Dimerisierung der Isocyanatgruppen erhalten. Bei den beliebigen Diiisocyanaten zur Herstellung der Ausgangsverbindungen A1) handelt es sich um aliphatische, cycloaliphatische, araliphatische und/oder aromatische Diisocyanate. Bevorzugte Beispiele sind 1,6-Diisocyanatohexan (HDI), 2-Methylpentamethylendiisocyanat-1,5 (DI 51), 2,2,4-(2,4,4)-Trimethylhexamethylendiisocyanat, 4,4'-Diisocyanatodicyclohexylmethan, 1,3- und 1,4-Diisocyanatocyclohexan, Isophorondiisocyanat (IPDI), Diphenylmethan-2,4' und/oder -4,4'-diisocyanat, Xylylendiisocyanat oder 2,4- und 2,6-Toluylendiisocyanat sowie beliebige Gemische dieser Isomeren, wobei diese Diisocyanate allein oder in Mischungen zur Herstellung der Komponente A1) eingesetzt werden können. Auch die Uretdiongruppen aufweisenden Polyisocyanate sind beliebig untereinander mischbar.

Als Katalysatoren zur Herstellung der Ausgangsverbindungen A1) aus den genannten Diisocyanaten sind grundsätzlich alle bekannten, die Dimerisierung von Isocyanatgruppen katalysierenden Verbindungen geeignet. Beispiele sind tertiäre organische Phosphine (US-PS 4 614 785, DE-OSS 19 34 763, 39 00 053), Tris-(dialkylamino)-phosphine (DE-OSS 30 30 513, 3227 779, 3437 635), substituierte Pyridine (DE-OSS 10 81 895, 37 39 549) und substituierte Imidazole oder Benzimidazole (EP 0 417 603).

Bevorzugte Ausgangsverbindungen A1) für das erfindungsgemäße Verfahren sind Uretdiongruppen aufweisende Polyisocyanate, die aus Diisocyanaten mit aliphatisch und/oder cycloaliphatisch gebundenen Isocyanatgruppen hergestellt sind.

Besonders bevorzugt werden die Uretdione des Isophorondiisocyanats (IPDI) und des 1,6-Diisocyanatohexan (HDI) verwendet.

Das isocyanuratfreie Uretdion des Isophorondiisocyanats ist bei Raumtemperatur hochviskos und größer als 10⁶ mPa s, bei 60 °C liegt die Viskosität bei 13·10³ mPa s und bei 80 °C bei 1,4·10³ mPa s. Der freie NCO-Gehalt liegt zwischen 16,8 und 18,5 Massen-%, d. h. dass mehr oder minder hohe Anteile an Polyuretdion des IPDI im Reaktionsprodukt vorliegen müssen. Der Monomergehalt liegt bei 1 Massen-%. Der Gesamt-NCO-Gehalt des Reaktionsproduktes nach dem Erhitzen auf 180 bis 200 °C beträgt 37,5 bis 37,8 Gew.-%.

Während der Dimerisierung von aliphatischen Diisocyanaten mit an sich bekannten Verfahren und Katalysatoren bildet sich als Nebenprodukt Isocyanurat in unterschiedlichen Mengen, so dass die NCO-Funktionalität der eingesetzten isocyanurathaltigen Polyisocyanat-Uretdione mindestens 2 beträgt.

Bei den Diisocyanaten A2) handelt es sich um die oben angegebenen, zur Herstellung der Komponente A1) geeigneten Diisocyanate. Sie können bis zu 60 Gew.-%, bezogen auf das Gesamtgewicht der Ausgangsverbindungen A1) und A2), ausmachen. Geeignete Gemische sind z. B. auch Lösungen von Uretdionen in Diisocyanaten, wie sie nach katalytischer Dimerisierung und ohne Abtrennung des nicht umgesetzten Diisocyanats erhalten werden. Bevorzugt sind IPDI und/oder HDI enthalten.

Bei den Isocyanuraten A2) handelt es sich bevorzugt um die Trimeren der Diisocyanate, die auch zur Herstellung der Uretdiongruppen aufweisenden Polyisocyanatverbindungen A1) verwendet werden. Die Isocyanurate können separat der Polyisocyanatverbindung A1) zugegeben werden, oder sie sind bereits Bestandteil der Polyisocyanatverbindung A1), da sie teilweise bei der Dimerisierung von Diisocyanaten als Nebenprodukt gebildet werden. Bevorzugt werden als Ausgangsverbindungen A2) IPDI und/oder HDI eingesetzt.

Als Verbindungen C) eignen sich alle in der PUR-Chemie üblicherweise eingesetzten Mono-, Di- oder Polyole des Molekulargewichts von mindestens 32.

Beispielsweise handelt es sich bei den Monoalkoholen um Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanol sowie Hydroxymethylcyclohexan.

Bei den Diolen handelt es sich beispielweise um Ethylenglykol, Triethylenglykol, Butandiol-1,4, Pentandiol-1,5, Hexandiol-1,6, 3-Methylpentandiol-1,5, Neopentylglykol, 2,2,4 (2,4,4)-Trimethylhexandiol sowie Hydroxypivalinsäureneopentylglykolester.

Bei den Triolen handelt es sich beispielweise um Trimethylolpropan, Ditrimethylolpropan, Trimethylolethan, Hexantriol-1,2,6, Butantriol-1,2,4, Tris(β-Hydroxyethyl)-isocyanurat, Pentaerythrit, Mannit oder Sorbit.

Es eignen sich auch Di- oder Polyole, die weitere funktionelle Gruppen enthalten. Hierbei handelt es sich um die an sich bekannten hydroxylgruppenhaltigen Polyester, Polycarbonate, Polycaprolactone, Polyether, Polythioether, Polyesteramide, Polyurethane oder Polyacetale. Sie besitzen ein zahlenmittleres Molekulargewicht von 134 bis 3 500.

Die Mono-, Di- oder Polyole werden allein oder in Mischungen verwendet.
Die erfindungsgemäßen uretdiongruppenhaltigen Polyadditionsprodukte werden gemäß dem wie folgt beschriebenen Verfahren erhalten.

Gegenstand der Erfindung ist auch ein Verfahren zur Herstellung von festen, uretdiongruppenhaltigen Polyadditionsverbindungen durch Umsetzung von
A) 40 bis 90 Massen-% mindestens einer aliphatischen, (cyclo)aliphatischen aromatischen oder cycloaliphatischen Polyisocyanatkomponente, die aufgebaut ist aus
   1. mindestens 40 Massen-% einer Uretdiongruppen aufweisenden Polyisocyanatverbindung mit einer mittleren Funktionalität von mindestens 2,0
      und
   2. höchstens 60 Massen-% mindestens einer Diisocyanatverbindung und/oder Isocyanuratverbindung ohne Uretdiongruppen;
B) 60 bis 10 Massen-% Dodecandiol-1,12;
C) 50 bis 0 Massen-% mindestens einer weiteren Verbindung mit mindestens einer Hydroxylgruppe,
wobei die uretdiongruppenhaltigen Polyadditionsverbindungen einen Schmelzpunkt von 40 bis 130 °C, einen freien NCO-Gehalt von kleiner 5 Gew.-% und einen Uretdiongehalt von 6 bis 18 Gew.-% aufweisen, in einem Lösemittel bei 50 bis 100 °C oder ohne Lösemittel in einem Intensivkneter bei 110 bis 190 °C.

Die Umsetzung im Lösemittel erfolgt im Allgemeinen bei Temperaturen von 50 bis 100 °C, vorzugsweise zwischen 60 und 90 °C. Die Hydroxylgruppen tragenden Komponenten B) und gegebenfalls C) werden vorgelegt und die uretdiongruppenhaltige Polyadditionsverbindung A) so rasch wie möglich zugesetzt, ohne dass die Reaktionstemperatur die oben genannten Grenzen überschreitet. Die Ausgangsverbindungen B) und C) können wahlweise zusammen vorgelegt oder in beliebiger Reihenfolge einzeln oder in Mischung nacheinander mit der uretdiongruppenhaltigen Polyadditionsverbindung A) umgesetzt werden. Nach erfolgter Umsetzung wird das Lösemittel entfernt. Dazu geeignet sind Abdampfschnecken, Filmextruder oder auch Sprühtrockner.

Geeignete Lösemittel sind Benzol, Toluol oder andere aromatische bzw. aliphatische Kohlenwasserstoffe, Essigester, wie Ethyl- oder Butylacetat, auch Ketone, wie Aceton, Methylethylketon, Methylisobutylketon, oder chlorierte aromatische und aliphatische Kohlenwasserstoffe sowie beliebige Gemische dieser oder anderer inerter Lösemittel.

Ein weiterer Gegenstand der Erfindung ist die lösemittelfreie und kontinuierliche Herstellung der erfindungsgemäßen uretdiongruppenhaltigen Polyadditionsprodukte mittels Intensivkneter, wie z. B. in einem Ein- oder Mehrschneckenextruder, insbesondere in einem Zweiwellenextruder, Planetwalzenextruder oder Ringextruder. Die lösemittelfreie Synthese erfordert Temperaturen von 110 bis 190 °C, die bereits deutlich im Respaltbereich für Uretdiongruppen liegen. Als vorteilhaft erwiesen sich dabei die kurzen Reaktionszeiten von < 5 Minuten, vorzugsweise < 3 Minuten, insbesondere <2 Minuten. Die kurzzeitige thermische Belastung reicht aus, um die Reaktionspartner homogen zu mischen und dabei vollständig oder weitgehend umzusetzen. Anschließend wird entsprechend der Gleichgewichtseinstellung gezielt abgekühlt und, falls erforderlich, der Umsatz vervollständigt.

Die Umsetzungsprodukte werden dem Reaktionskneter in getrennten Produktströmen zugeführt, wobei die Ausgangskomponenten bis auf 120 °C, vorzugsweise bis 90 °C, vorgewärmt werden können. Handelt es sich um mehr als zwei Produktströme, können diese auch gebündelt zudosiert werden. Ausgangsverbindungen B) und/oder C) und/oder Katalysatoren und/oder weitere übliche Lack-Zuschlagsstoffe, wie Verlaufmittel und/oder Stabilisatoren, können zu einem Produktstrom zusammengefasst werden.

Ebenfalls kann die Reihenfolge der Produktströme variabel gehandhabt werden sowie die Eintrittsstelle für die Produktströme unterschiedlich sein.

Zur Nachreaktion, Abkühlung, Zerkleinerung und Absackung werden bekannte Verfahren und Technologien verwendet.

Zur Beschleunigung der Polyadditionsreaktion können auch die in der PUR-Chemie üblichen Katalysatoren verwendet werden. Sie werden in einer Konzentration von 0,01 bis 2 Gew.-%, vorzugsweise von 0,03 bis 0,5 Gew.-%, bezogen auf die eingesetzten Reaktionskomponenten, eingesetzt. Katalysatoren sind beispielsweise tertiäre Amine, wie Triethylamin, Pyridin oder N,N-Dimethylaminocyclohexan, oder Metallsalze, wie Eisen(III)-chlorid, Molybdänglykolat und Zinkchlorid. Als besonders geeignet erwiesen sich Zinn-II- und -IV-Verbindungen. Genannt seien hier besonders Dibutylzinndilaurat (DBTL) und Zinnoctoat.

Nachfolgend wird der Gegenstand der Erfindung anhand von Beispielen näher erläutert.

### Beispiele:

### A) Herstellung der uretdiongruppenhaltigen Polyadditionsverbindung

### 1. Aus Lösemittel

In einem Reaktor werden 230 g Dodecandiol-1,12 und 0,5 g Dibutylzinndilaurat in 1 l Aceton gelöst. Die Lösung wird auf 50 °C aufgeheizt. Unter starkem Rühren und Inertgasatmosphäre werden 470 g IPDI-Uretdion hinzugegeben. Die Umsetzung wird mittels titrimetrischer NCO-Bestimmung kontrolliert und ist nach 2 Stunden beendet. Danach wird das Lösemittel entfernt, das Produkt abgekühlt und zerkleinert. Das Produkt besitzt einen Schmelzbereich von 89 bis 92 °C und einen NCO-Gehalt von 11,4 %.

### 2. Lösemittelfrei

In die Einzugsgehäuse eines Doppelschneckenextruders werden 470 g IPDI-Uretdion mit einer Temperatur von 60 bis 110 °C eingespeist, wobei gleichzeitig eine Mischung aus 230 g Dodecandiol-1,12 und 0,5 g Dibutylzinndilaurat mit einer Temperatur von 25 bis 110 °C zudosiert werden.

Der eingesetzte Extruder setzt sich aus zehn Gehäusen zusammen, davon fünf Heizzonen. Die Soll-Temperaturen der fünf Heizzonen liegen zwischen 50 und 180 °C und können einzeln gesteuert werden. Die Regelung in den Gehäusen erfolgt durch elektrische Heizung und pneumatische Kühlung. Das Düsenelement wird mittels Ölthermostat beheizt. Die Drehzahl der Doppelschnecke, aufgebaut mit Förderelementen, liegt zwischen 50 und 380 Upm.

Das Reaktionsprodukt, das in einer Menge von 10 bis 130 kg/h anfällt, wird abgekühlt, zerkleinert und abgesackt. Es besitzt einen Schmelzbereich von 89 bis 92 °C und einen NCO-Gehalt von 11,4 %.

## Patentansprüche

1. Feste, uretdiongruppenhaltige Polyadditionsverbindungen, erhältlich durch Umsetzung von
A) 40 bis 90 Massen-% mindestens einer aliphatischen, (cyclo)aliphatische, aromatischen oder cycloaliphatischen Polyisocyanatkomponente, aufgebaut aus
1. mindestens 40 Massen-% einer Uretdiongruppen aufweisenden Polyisocyanatverbindung mit einer mittleren Funktionalität von mindestens 2,0
und
2. höchstens 60 Massen-% mindestens einer Diisocyanatverbindung und/oder Isocyanuratverbindung ohne Uretdiongruppen;
B) 60 bis 10 Massen-% Dodecandiol-1,12;
C) 50 bis 0 Massen-% mindestens einer weiteren Verbindung mit mindestens einer Hydroxylgruppe;
wobei die uretdiongruppenhaltigen Polyadditionsverbindungen einen Schmelzpunkt von 40 bis 130 °C, einen freien NCO-Gehalt von kleiner 5 Gew.-% und einen Uretdiongehalt von 6 bis 18 Gew.-% aufweisen.

2. Feste, uretdiongruppenhaltige Polyadditionsverbindungen nach Anspruch 1,
**dadurch gekennzeichnet,**
**dass** Polyisocyanatkomponenten A) auf Basis von aliphatischen, cycloaliphatischen, araliphatischen und/oder aromatischen Diisocyanaten allein oder in Mischungen enthalten sind.

3. Feste, uretdiongruppenhaltige Polyadditionsverbindungen nach Anspruch 2,
**dadurch gekennzeichnet,**
**dass** Polyisocyanatkomponenten A) auf Basis von 1,6-Diisocyanatohexan (HDI), 2-Methylpentamethylendiisocyanat-1,5, 2,2,4 (2,4,4)-Trimethylhexamethylendiisocyanat, 4,4'-Diisocyanatodicyclohexyl-methan, 1,3- und 1,4-Diisocyanatocyclohexan, Isophorondiisocyanat (IPDI), Diphenylmethan-2,4'-, -4,4'-diisocyanat, Xylylendiisocyanat und/oder 2,4- und/oder 2,6-Toluylendiisocyanat enthalten sind.

4. Feste, uretdiongruppenhaltige Polyadditionsverbindungen nach mindestens einem der vorherigen Ansprüche,
**dadurch gekennzeichnet,**
**dass** Polyisocyanatkomponenten A) auf Basis von IPDI und/oder HDI enthalten sind.

5. Feste, uretdiongruppenhaltige Polyadditionsverbindungen nach mindestens einem der vorherigen Ansprüche,
**dadurch gekennzeichnet,**
**dass** als Verbindung C) Mono-, Di- oder Polyole mit Molekulargewichten von mindestens 32 enthalten sind.

6. Feste, uretdiongruppenhaltige Polyadditionsverbindungen nach mindestens einem der vorherigen Ansprüche,
**dadurch gekennzeichnet,**
**dass** als Verbindung C) Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanol, Hydroxymethylcydohexan, Ethylenglykol, Triethylenglykol, Butandiol-1,4, Pentandiol-1,5, Hexandiol-1,6, 3-Methylpentandiol-1,5, Neopentylglykol, 2,2,4 (2,4,4)-Trimethylhexandiol, Hydroxypivalinsäureneopentylglykolester, Trimethylolpropan, Ditrimethylolpropan, Trimethylolethan, Haexantiol-1,2,6, Butantriol-1,2,4, Tris(β-Hydroxyethyl)-isocyanurat, Pentaerythrit, Mannit, Sorbit, hydroxylgruppenhaltigen Polyester, Polycarbonate, Polycaprolactone, Polyether, Polythioether, Polyesteramide, Polyurethane und/oder Polyacetale enthalten sind.

7. Verfahren zur Herstellung von festen, uretdiongruppenhaltigen Polyadditionsverbindungen durch Umsetzung von
A) 40 bis 90 Massen-% mindestens einer aliphatischen, (cyclo)aliphatischen, aromatischen oder cycloaliphatischen Polyisocyanatkomponente, aufgebaut aus
1. mindestens 40 Massen-% einer Uretdiongruppen aufweisenden Polyisocyanatverbindung mit einer mittleren Funktionalität von mindestens 2,0
und
2. höchstens 60 Massen-% mindestens einer Diisocyanatverbindung und/oder Isocyanuratverbindung ohne Uretdiongruppen;
B) 60 bis 10 Massen-% Dodecandiol-1,12;
C) 50 bis 0 Massen-% mindestens einer weiteren Verbindung mit mindestens einer Hydroxylgruppe;
wobei die uretdiongruppenhaltigen Polyadditionsverbindungen einen Schmelzpunkt von 40 bis 130 °C, einen freien NCO-Gehalt von kleiner 5 Gew.-% und einen Uretdiongehalt von 6 bis 18 Gew.-% aufweisen, in einem Lösemittel bei 50 bis100 °C.

8. Verfahren zur Herstellung von festen, uretdiongruppenhaltigen Polyadditionsverbindungen durch Umsetzung von
A) 40 bis 90 Massen-% mindestens einer aliphatischen, (cyclo)aliphatischen aromatischen oder cycloaliphatischen Polyisocyanatkomponente, aufgebaut aus
1. mindestens 40 Massen-% einer Uretdiongruppen aufweisenden Polyisocyanatverbindung mit einer mittleren Funktionalität von mindestens 2,0
und
2. höchstens 60 Massen-% mindestens einer Diisocyanatverbindung und/oder Isocyanuratverbindung ohne Uretdiongruppen;
B) 60 bis 10 Massen-% Dodecandiol-1,12;
C) 50 bis 0 Massen-% mindestens einer weiteren Verbindung mit mindestens einer Hydroxylgruppe;
wobei die uretdiongruppenhaltigen Polyadditionsverbindungen einen Schmelzpunkt von 40 bis 130 °C, einen freien NCO-Gehalt von kleiner 5 Gew.-% und einen Uretdiongehalt von 6 bis 18 Gew.-% aufweisen,
in einem Intensivkneter bei 110 bis 190 °C.

9. Verfahren nach Anspruch 8,
**dadurch gekennzeichnet,**
**dass** die Reaktion im Ein-, Zwei- oder Mehrschneckenextruder, Ringextruder oder Planetwalzenextruder erfolgt.

10. Verfahren nach Anspruch 9,
**dadurch gekennzeichnet,**
**dass** die Reaktion in einem Zweischneckenextruder erfolgt.

11. Verfahren nach mindestens einem der Ansprüche 8 bis 10,
**dadurch gekennzeichnet,**
**dass** die Reaktion in Gegenwart von Katalysatoren und/oder Zuschlagstoffen erfolgt.

12. Verfahren nach mindestens einem der Ansprüche 8 bis 11,
**dadurch gekennzeichnet,**
**dass** die Einsatzstoffe und/oder Katalysator und/oder Zuschlagstoffe gemeinsam oder in getrennten Produktströmen, in flüssiger oder fester Form, dem Extruder, Intensiv-Kneter, Intensiv-Mischer oder statischen Mischer zugeführt werden.

13. Verfahren nach mindestens einem der Ansprüche 8 bis 12,
**dadurch gekennzeichnet,**
**dass** die Zuschlagstoffe gemeinsam mit den Einsatzstoffen zu einem Produktstrom zusammengefasst werden.

14. Verfahren nach mindestens einem der Ansprüche 8 bis 13,
**dadurch gekennzeichnet,**
**dass** bei mehr als zwei Produktströmen diese gebündelt zugeführt werden.

## Claims

1. A solid polyaddition compound containing uretdione groups and obtainable by reacting
A) from 40% to 90% by mass of at least one aliphatic, (cyclo)aliphatic, aromatic or cycloaliphatic polyisocyanate component composed of
1. at least 40% by mass of a polyisocyanate compound containing uretdione groups and having an average functionality of at least 2.0
and
2. not more than 60% by mass of at least one diisocyanate compound and/or isocyanurate compound without uretdione groups;
B) from 60% to 10% by mass of dodecane-1,12-diol;
C) from 50% to 0% by mass of at least one further compound having at least one hydroxyl group;
the polyaddition compound having a melting point of from 40 to 130°C, a free NCO content of less than 5% by weight, and a uretdione content of from 6 to 18% by weight.

2. A solid polyaddition compound containing uretdione groups according to claim 1, **characterized in that**
polyisocyanate components A) based on aliphatic, cycloaliphatic, araliphatic and/or aromatic diisocyanates, alone or in mixtures, are present.

3. A solid polyaddition compound containing uretdione groups according to claim 2, **characterized in that**
polyisocyanate components A) based on 1,6-diisocyanatohexane (HDI), 2-methylpentamethylene 1,5-diisocyanate, 2,2,4(2,4,4)-trimethylhexamethylene diisocyanate, 4,4'-diisocyanatodicyclohexylmethane, 1,3- and 1,4-diisocyanatocyclohexane, isophorone diisocyanate (IPDI), diphenylmethane 2,4'- and/or 4,4'-diisocyanate, xylylene diisocyanate and/or 2,4- and/or 2,6-tolylene diisocyanate are present.

4. A solid polyaddition compound containing uretdione groups according to at least one of the preceding claims, **characterized in that**
polyisocyanate components A) based on IPDI and/or HDI are present.

5. A solid polyaddition compound containing uretdione groups according to at least one of the preceding claims, **characterized in that**
as compound C) monools diols or polyols having molecular weights of at least 32 are present.

6. A solid polyaddition compound containing uretdione groups according to at least one of the preceding claims, **characterized in that**
as compound C) methanol, ethanol, n-propanol, isopropanol, n-butanol, isobutanol, sec-butanol, the isomeric pentanols, hexanols, octanols, and nonanols, n-decanol, n-dodecanol, n-tetradecanol, n-hexadecanol, n-octadecanol, cyclohexanol, the isomeric methylcyclohexanols, hydroxymethylcyclohexane, ethylene glycol, triethylene glycol, butane-1,4-diol, pentane-1,5-diol, hexane-1,6-diol, 3-methylpentane-1,5-diol, neopentyl glycol, 2,2,4(2,4,4)-trimethylhexanediol, neopentyl glycol hydroxypivalate, trimethylolpropane, ditrimethylolpropane, trimethylolethane, hexane-1,2,6-triol, butane-1,2,4-triol, tris(β-hydroxyethyl) isocyanurate, pentaerythritol, mannitol, sorbitol, hydroxyl-containing polyesters, polycarbonates, polycaprolactones, polyethers; polythloethers, polyesteramides; polyurethanes and/or polyacetals are present.

7. A process for preparing a solid polyaddition compound containing uretdione groups by reacting
A) from 40% to 90% by mass of at least one aliphatic, (cyclo)aliphatic, aromatic or cycloaliphatic polyisocyanate component composed of
A) from 40% to 90% by mass of at least one aliphatic, (cyclo)aliphatic, aromatic or cycloaliphatic polyisocyanate component composed of
1. at least 40% by mass of a polyisocyanate compound containing uretdione groups and having an average functionality of at least 2.0
and
2. not more than 60% by mass of at least one diisocyanate compound and/or isocyanurate compound without uretdione groups;
B) from 60% to 10% by mass of dodecane-1,12-diol;
C) from 50% to 0% by mass of at least one further compound having at least one hydroxyl group;
the polyaddition compound having a melting point of from 40 to 130°C, a free NCO content of less than 5% by weight, and a uretdione content of from 6 to 18% by weight, In a solvent at from 50 to 100°C.

8. A process for preparing a solid polyaddition compound containing uretdione groups by reacting
A) from 40% to 90% by mass of at least one aliphatic, (cyclo)aliphatic, aromatic or cycloaliphatic polyisocyanate component composed of
1. at least 40% by mass of a polyisocyanate compound containing uretdione groups and having an average functionality of at least 2.0
and
2. not more than 60% by mass of at least one diisocyanate compound and/or isocyanurate compound without uretdione groups;
B) from 60% to 10% by mass of dodecane-1,12-diol;
C) from 50% to 0% by mass of at least one further compound having at least one hydroxyl group;
the polyaddition compound having a melting point of from 40 to 130°C, a free NCO content of less than 5% by weight, and a uretdione content of from 6 to 18% by weight, in an intensive kneading apparatus at from 110 to 190°C.

9. A process according to claim 8,
**characterized in that**
**characterized in that** the reaction takes place in a single -, twin - or multi - screw extruder, a ring extruder or a planetary roller extruder.

10. A process according to claim 9, **characterized in that** the reaction takes place in a twin-screw extruder.

11. A process according to at least one of claims 8 to 10, **characterized in that** the reaction takes place in the presence of catalysts and/or adjuvants.

12. A process according to at least one of claims 8 to 11, **characterized in that** the ingredients and/or catalyst and/or adjuvants are supplied together or in separate product streams, in liquid or solid form, to the extruder, intensive kneading apparatus, intensive mixer or static mixer.

13. A process according to at least one of claims 8 to 12, **characterized in that** adjuvants are combined with the ingredients to form one product stream.

14. A process according to at least one of claims 8 to 13, wherein product streams, when they number more than two, are supplied in bundled form.

## Revendications

1. Compositions de polyaddition solides contenant des groupes uretdione, obtenues par mise en réaction de :
A) 40 à 90 % en masse d'au moins un composant de polyisocyanate aliphatique, (cyclo)aliphatique, aromatique ou cycloaliphatique, constitué
1. d'au moins 40 % en masse d'un composé de polyisocyanate présentant des groupes uretdione avec une fonctionnalité moyenne d'au moins 2,0, et
2. d'au maximum 60 % en masse d'au moins un composé de diisocyanate et/ou d'isocyanurate sans groupes uretdione ;
B) 60 à 10 % en masse de dodécandiol-1,12 ;
C) 50 à 0 % en masse d'au moins un autre composé avec au moins un groupe hydroxyle,
les compositions de polyaddition contenant des groupes uretdione présentant un point de fusion de 40 à 130°C, une teneur en NCO libre inférieure à 5% en poids et une teneur en uretdione de 6 à 18 % en poids.

2. Compositions de polyaddition solides contenant des groupes uretdione selon la revendication 1,
**caractérisées en ce que**
des composants de polyisocyanate A) à base de diisocyanates aliphatiques, cycloaliphatiques, araliphatiques et/ou aromatiques sont contenus seuls ou en mélanges.

3. Compositions de polyaddition solides contenant des groupes uretdione selon la revendication 2,
**caractérisées en ce qu'**
elles contiennent des composants de polyisocyanate A) à base de 1,6-diisocyanatohexane (HDI), 2-méthylpentaméthylène-diisocyanate-1,5, 2,2,4 (2,4,4)-triméthylhexaméthylène-diisocyanate, 4,4'-diisocyanatodicyclohexylméthane, 1,3- et 1,4-diisocyanatocylohexane, isophorondiisocyanate (IPDI), diphénylméthane-2,4'-4,4'-diisocyanate, xylylène-diisocyanate et/ou 2,4- et/ou 2,6-toluylène-diisocyanate.

4. Compositions de polyaddition solides contenant des groupes uretdione selon au moins l'une des revendications précédentes,
**caractérisées en ce qu'**
elles contiennent des composants de polyisocyanate A) à base de IPD et/ou HDI.

5. Compositions de polyaddition solides contenant des groupes uretdione selon au moins l'une des revendications précédentes,
**caractérisées en ce que**
des mono-, di- ou polyols ayant des poids moléculaires d'au moins 32 sont contenus comme composant C).

6. Compositions de polyaddition solides contenant des groupes uretdione selon au moins l'une des revendications précédentes,
**caractérisées en ce que**
le composant C) est du méthanol, de l'éthanol, du n-propanol, de l'isopropanol, du n-butanol, de l'isobutanol, du sec-butanol, les isomères pentanol, hexanol, octanol et nonanol, n-décanol, n-dodécanol, n-tétradécanol, n-hexadécanol, n-octadécanol, cyclohexanol, les isomères méthylcyclohexanol, hydoxyméthylcyclohexane, éthylène glycol, triéthylène glycol, butandiol-1,4, pentandiol-1,5, hexandiol-1,6, 3-méthylpentandiol-1,5, néopentylglycol, 2,2,4 (2,4,4)-triméthylhexandiol, des esters néopentyglycoliques d'acide hydroxypivalique, du triméthylolpropane, du ditriméthylolpropane, du tripéthyloléthane, de l'haexantiol-1,2,6, du butantriol-1,2,4, du tris(β-hydroxyéthyl)isocyanurate, du pentaérythritol, du mannitol, du sorbitol, du polyester contenant des groupes hydroxyle, des polycarbonates, du polycaprolactone, du polyéther, du polythioéther, du polyesteramide, du polyuréthane et/ou du polyacétate.

7. Procédé de fabrication de compositions de polyaddition solides contenant des groupes uretdione par mise en réaction de :
A) 40 à 90 % en masse d'au moins un composant de polyisocyanate aliphatique, (cyclo)aliphatique, aromatique ou cycloaliphatique, constitué :
1. d'au moins 40 % en masse d'un composé de polyisocyanate présentant des groupes uretdione avec une fonctionnalité moyenne d'au moins 2,0, et
2. d'au maximum 60 % en masse d'au moins un composé de diisocyanate et/ou d'isocyanurate sans groupes uretdione ;
B) 60 à 10 % en masse de dodécandiol-1,12 ;
C) 50 à 0 % en masse d'au moins un autre composé avec au moins un groupe hydroxyle,
les compositions de polyaddition contenant des groupes uretdione présentant un point de fusion de 40 à 130°C, une teneur en NCO libre inférieure à 5 % en poids et une teneur en uretdione de 6 à 18 % en poids, dans un solvant à 50-100°C.

8. Procédé de fabrication de compositions de polyaddition solides contenant des groupes uretdione par mise en réaction de :
A) 40 à 90 % en masse d'au moins un composant de polyisocyanate aliphatique, (cyclo)aliphatique, aromatique ou cycloaliphatique, constitué :
1. d'au moins 40 % en masse d'un composé de polyisocyanate présentant des groupes uretdione avec une fonctionnalité moyenne d'au moins 2,0, et
2. d'au maximum 60 % en masse d'au moins un composé de diisocyanate et/ou d'isocyanurate sans groupes uretdione ;
B) 60 à 10 % en masse de dodécandiol-1,12 ;
C) 50 à 0 % en masse d'au moins un autre composé avec au moins un groupe hydroxyle,
les compositions de polyaddition contenant des groupes uretdione présentant un point de fusion de 40 à 130°C, une teneur en NCO libre inférieure à 5% en poids et une teneur en uretdione de 6 à 18% en poids, dans un malaxeur intensif à 110-190°C.

9. Procédé selon la revendication 8,
**caractérisé en ce que**
la réaction a lieu dans une extrudeuse à une, deux ou plusieurs vis, une extrudeuse annulaire ou une extrudeuse à rouleaux planétaires.

10. Procédé selon la revendication 9,
**caractérisé en ce que**
la réaction a lieu dans une extrudeuse à deux vis.

11. Procédé selon au moins une des revendications 8 à 10,
**caractérisé en ce que**
la réaction a lieu en présence de catalyseurs et/ou d'additifs.

12. Procédé selon au moins une des revendications 8 à 11,
**caractérisé en ce que**
les substances utilisées et/ou le catalyseur et/ou les additifs sont ajoutés conjointement ou en écoulements séparés : de produits, sous forme liquide ou solide, à l'extrudeuse, au malaxeur intensif, au mélangeur intensif ou au mélangeur statique.

13. Procédé selon au moins une des revendications 8 à 12,
**caractérisé en ce que**
les additifs sont réunis en un écoulement de produits avec les substances utilisées.

14. Procédé selon au moins une des revendications 8 à 13,
**caractérisé en ce que**
lorsqu'on a plus de deux écoulements de produits, ceux-ci sont ajoutés liés en faisceau.
